Europäisches Patentamt

European Patent Office

Office européen des brevets

(19)

(11) Veröffentlichungsnummer: **0 025 488**
B1

(12) **EUROPÄISCHE PATENTSCHRIFT**

(45) Veröffentlichungstag der Patentschrift:
16.03.83

(51) Int. Cl.³: **B 60 T 17/20**

(21) Anmeldenummer: 80104126.0

(22) Anmeldetag: 16.07.80

(54) Notbremszugkasten.

(30) Priorität: **13.09.79 CH 8282/79**

(43) Veröffentlichungstag der Anmeldung:
**25.03.81 Patentblatt 81/12**

(45) Bekanntmachung des Hinweises auf die Patenterteilung:
**16.03.83 Patentblatt 83/11**

(84) Benannte Vertragsstaaten:
**AT BE CH DE FR GB IT LI NL SE**

(56) Entgegenhaltungen:
**CH-A-248 675**
**DE-B-1 274 158**
**FR-A-619 908**
**FR-A-880 274**
**GB-A-1 312 223**

(73) Patentinhaber: **Werkzeugmaschinenfabrik Oerlikon-Bührle AG, Birchstrasse 155, CH-8050 Zürich (CH)**

(72) Erfinder: **Müller, Walter, Rebenweg 10, CH-8303 Bassersdorf (CH)**

ACTORUM AG

Notbremszugkasten

Die Erfindung betrifft einen Notbremszugkasten für Druckluftbremsen von Schienenfahrzeugen mit einem Ventil und einem Verriegelungsmechanismum an einem verschiebbaren Handgriff, mit daran befestigtem Griff, und an einem durch die Vorspannkraft einer Feder verschiebbaren Schieber zum zwangsweisen Öffnen des Ventils durch manuelles Betätigen des Griffes.

Solche Notbremszugkästen dienen als Auslöseorgan für die Notbremse. Sie werden in der notwendigen Anzahl in den Schienenfahrzeugen eingebaut und sind über eine Steuerleitung mit einem Notbremsventil verbunden. Durch Ziehen an einem Notbremsgriff des Notbremszugkastens wird die Steuerleitung über das Ventil im Notbremszugkasten entlüftet und die Hauptleitung wird nun ihrerseits über das Notbremsventil rasch entleert, so dass eine Schnellbremsung entsteht. Nach Betätigung der Notbremse bleibt der Griff in der gezogenen Stellung eingerastet und kann nur mit einem geeigneten Vierkantschlüssel zurückgestellt werden.

Es ist ein Notbremszugkasten gemäss dem Oberbegriff des Patentanspruchs 1 bekannt (GB-Patent Nr. 1312223), bei dem durch unvollständiges Herausziehen des Handgriffes bzw. des damit befestigten Schiebers das eingebaute Ventil geöffnet wird, ohne dass der Verriegelungsmechanismus, d.h. die unter Federvorspannung stehende Klinke in die dafür vorgesehene Nute am Handgriffschieber zum Verriegeln gebracht werden muss. Dadurch kann eine Notbremsung missbräuchlich eingeleitet werden, ohne dass der auslösende Zugkasten identifiziert werden kann.

Die Aufgabe der vorliegenden Erfindung, wie sie in den Ansprüchen gekennzeichnet ist, besteht darin, einen Notbremszugkasten so auszubilden, dass eine missbräuchliche Einleitung einer Notbremsung, ohne dass der entsprechende Zugkasten identifiziert werden kann, verhindert wird.

Ein Ausführungsbeispiel des erfindungsgemässen Notbremszugkasten ist anhand der beigefügten Zeichnung dargestellt. Es zeigen:

Fig. 1 eine Ansicht des Notbremszugkastens gemäss Schnitt A-A,
Fig. 2 eine Seitenansicht gemäss Schnitt B-B,
Fig. 3 eine Aufsicht gemäss Schnitt C-C, und
Fig. 4 eine schematische Anordnung von mehreren Notbremszugkästen in einem Fahrzeug.

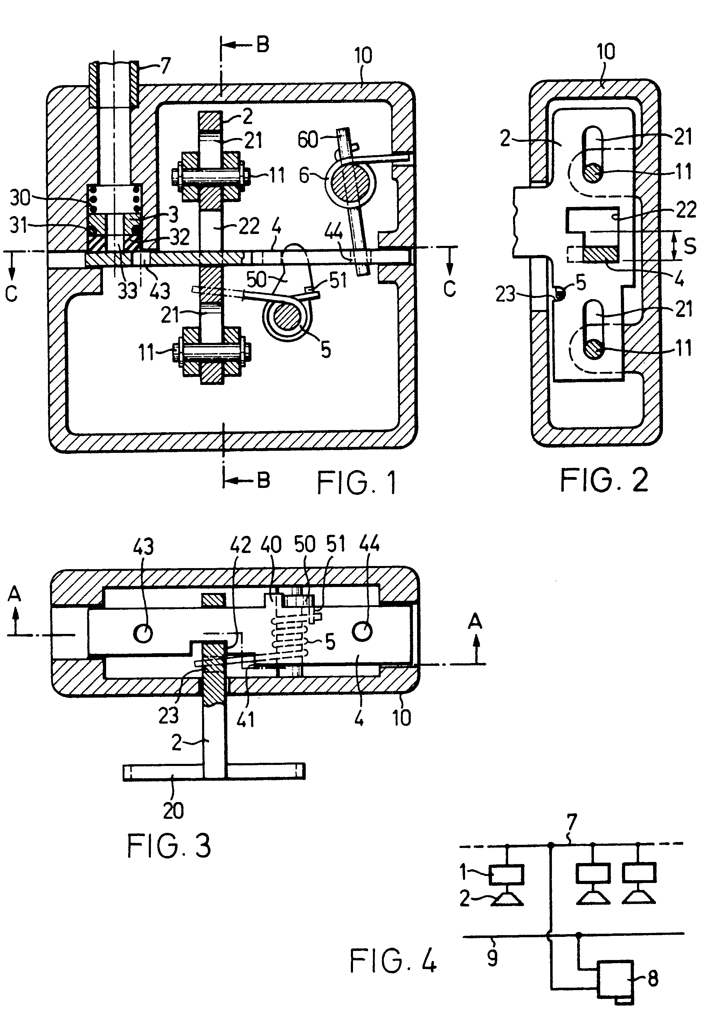

Gemäss Fig. 4 sind in einem Schienenfahrzeug beispielsweise drei Notbremszugkästen 1 und ein Notbremsventil 8 an eine Steuerleitung 7 und das Notbremsventil 8 an eine Hauptluftleitung 9 angeschlossen. Durch Ziehen an einem Handgriff 2 bei einem der Notbremszugkästen 1 wird die Steuerleitung 7 entlüftet. Dies hat zur Folge, dass das als Relaisventil dienende Notbremsventil 8 die Hauptleitung 9 entlüftet und damit eine Notbremsung einleitet.

Der erfindungsgemässe Notbremszugkasten enthält gemäss Fig. 1, 2 und 3 ein Gehäuse 10, je einen darin verschiebbar angeordneten Handgriff 2 und Schieber 4, ein mit der externen Steuerleitung 7 verbundenes Ventil 3 sowie je eine auf den Schieber 4 einwirkende Verschiebeeinrichtung mit Feder 5 und Hebel 50 und Rückstelleinrichtung mit Rückstellfeder 6 und Rückstellstift 60. Der Handgriff 2 weist zwei Schlitze 21, eine Aussparung bzw. Kulisse 22, eine Aussparung 23, in der das eine Ende der Feder 5 gelagert ist sowie, gemäss Fig. 3, einen am äusseren Ende befestigten Griff 20 auf. In den Schlitzen 21 ist je ein Führungsstift 11, gelagert in gehäusefesten Supporten, angeordnet. Das Ventil 3 mit der Öffnung 33 wird durch eine Feder 30 auf den Schieber 4 gedrückt, wobei zwei Dichtringe 31 und 32 die Abdichtung der Steuerleitung 7 im geschlossenen Zustand des Ventils 3 gewährleisten. Der Schieber 4 ist im Gehäuse 10 gemäss Fig. 1 und 3 verschiebbar geführt und durchtritt in der Kulisse 22 den Handgriff 2. Eine Nase 42 verhindert im Zusammenwirken mit der Kulisse 22 des Handgriffs 2 eine Verschiebung des Schiebers 4 nach links in der dargestellten Stellung gemäss Fig. 1 und 3. Weiterhin weist der Schieber 4 je einen Ansatz 40 und 41 sowie je eine Bohrung 43 und 44 auf. Die Feder 5 ist als vorgespannte Ringfeder ausgebildet. Sie ist auf einer Welle gelagert und greift, wie oben erwähnt, in der Aussparung 23 am Handgriff 2 und an einem Nocken 51 des Hebels 50 derart an, dass über den Hebel 50 auf den Ansatz 40 auf den Schieber 4 eine Verschiebekraft nach links resultiert. Die Rückstellfeder 6 ist ebenfalls als vorgespannte Ringfeder ausgebildet und ist auf der Welle einer nicht dargestellten Vierkantschlüssel-Rückstelleinrichtung gelagert, in der auch der Rückstellstift 60, der in die Bohrung 44 des Schiebers 4 eingreift, befestigt ist.

Die Wirkungsweise des Notbremszugkastens ist folgende: Die in den Fig. 1 bis 3 dargestellte Lage zeigt den Zustand vor einer Auslösung der Notbremsung. Dabei steht die Nase 42 des Schiebers 4 am Handgriff 2 an, wodurch eine Verschiebung des unter der Kraft der Feder 5 stehenden Schiebers 4 nach links verhindert wird. Die Bohrung 43 am Schieber 4 steht dadurch nicht mit der Ventilöffnung 33 in Deckung. Die Steuerleitung 7 ist somit über das Ventil 3 abgeschlossen.

Wird der Griff 20 am Handgriff 2 um mindestens die Strecke S (s. Fig. 2) nach unten gezogen, so wird der Schieber 4 unter der Kraft der vorgespannten Feder 5 in der Kulisse 22 nach links bewegt bis der Ansatz 41 am Handgriff 2 ansteht. Damit wird die Bohrung 43 in Deckung zur Ventilöffnung 33 gebracht und die Steuerleitung 7 und in der Folge über das Notbremsventil 8 die Hauptleitung 9 werden entlüftet, so dass eine Schnellbremsung einsetzt. Der Handgriff 2 verbleibt in der unteren Stellung infolge der Verriegelung der Nase 42 in der Kulisse 22, bzw. die Auslösung einer Notbremsung kann also erst nach Verriegelung der zusammenwirkenden Nase 42 und Kulisse 22 erfolgen. Somit kann der betätigte Notbremszugkasten eindeutig identifiziert werden.

Die Rückstellung erfolgt durch die Verschiebung des Schiebers 4 nach rechts mit einem speziellen Vierkantschlüssel über die Rückstelleinrichtung, bzw. über den in die Bohrung 44 eingreifenden Rückstellstift 60.

Der Schutzbereich des Anspruchs 1 bleibt nicht auf dieses eine Ausführungsbeispiel limitiert, sondern erfasst auch andere Ausführungen mit zusammenwirkenden Kulissen und Nasen am Handgriff und/oder Schieber bzw. umgekehrt, beispielsweise eine Kulisse im oder am Schieber 4 und eine Nase am Handgriff 2.

**Patentansprüche**

1. Notbremszugkasten für Druckluftbremsen von Schiebenfahrzeugen mit einem Ventil (3) und einem Verriegelungsmechanismus an einem verschiebbaren Handgriff (2), mit daran befestigtem Griff (20), und an einem durch die Vorspannkraft einer Feder (5) verschiebbaren Schieber (4) zum zwangsweisen Öffnen des Ventils (3) durch manuelles Betätigen des Griffes (20), dadurch gekennzeichnet, dass der Schieber (4) eine Öffnung (33) des Ventils (3) kontrolliert, und dass eine Kulisse (22) und eine Nase (42), die an Handgriff (2) und Schieber (4) angeordnet sind, derart zusammenwirken, dass bie Normalstellung der Handgriff (2) den Schieber (4) sperrt und dieser die Ventilöffnung (33) verschlossen hält, jedoch bei manuell betätigtem Griff (20) der Handgriff (2) erst nach einem bestimmten Weg (S) den unter Federvorspannung stehenden Schieber (4) entsperrt bzw. zum Verriegeln und gleichzeitigen Öffnen des Ventils (3) freigibt.

2. Notbremszugkasten gemäss Anspruch 1, dadurch gekennzeichnet, dass die Kulisse (22) im Handgriff (2) und die Nase (42) am Schieber (4) vorgesehen sind.

3. Notbremszugkasten gemäss Anspruch 1, dadurch gekennzeichnet, dass die vorgespannte Feder (5) über einen Hebel (50) auf einen Ansatz (40) des Schiebers (4) einwirkt.

**Claims**

1. Emergency brake pull box for compressed air brakes of rail vehicles, this pull box possessing a valve (3) and a locking mechanism on a movable handle (2), to which a grip (20) is secured, and on a slider (4), which can be moved by the preload-force of a spring (5), and which is provided for the purpose of forcibly opening the valve (3) as the result of manual operation of the grip (20), characterized in that the slider (4) controls an opening (33) of the valve (3), and in that a gate (22) and a lug (42), which are located on the handle (2) and the slider (4), interact in a manner such that, in the normal position, the handle (2) blocks the slider (4), the latter holding the valve-opening (33) closed, but when the grip (20) is operated manually, the handle (2), after first having moved through a defined travel (S), unlocks the slider (4), which is subjected to spring preload, and/or releases the slider for the purpose of locking and simultaneously opening the valve (3).

2. Emergency brake pull box according to claim 1, characterized in that the gate (22) is provided in the handle (2), and the lug (42) is provided on the slider (4).

3. Emergency brake pull box according to claim 1, characterized in that the preloaded spring (5) acts on a projection (40) of the slider (4), via a lever (50).

**Revendications**

1. Boîtier de tirette de frein de secours pour des freins à air comprimé de véhicules ferroviaires comportant une vanne (3) et un mécanisme de verrouillage prévu sur un dispositif à poignée (2) susceptible de coulisser muni d'une poignée (20), et un tiroir (4) susceptible de coulisser sous l'effet de la précontrainte d'un ressort (5) pour ouvrir de force la vanne (3) par la commande manuelle de la poignée (20), boîtier caractérisé en ce que le tiroir (4) contrôle l'orifice (33) de la vanne (3) et en ce qu'une coulisse (22) et un bec (42) prévus sur le dispositif à poignée (2) et sur le tiroir (4) coopèrent de façon qu'en position normale le dispositif à poignée (2) bloque le tiroir (4) et que celui-ci maintient l'orifice de vanne (33) fermé alors que, par l'actionnement manuel de la poignée (20), le dispositif à poignée (2) ne débloque le tiroir (4) soumis à la précontrainte du ressort qu'après une certaine course (5), c'est-à-dire le libère pour verrouiller et en même temps ouvrir la vanne (3).

2. Boîtier de tirette de frein de secours selon la revendication 1, caractérisé en ce que la coulisse (22) est prévue dans le dispositif à poignée (2) et le bec (42) sur le tiroir (4).

3. Boîtier de tirette de frein de secours selon la revendication 1, caractérisé en ce que le ressort précontraint (5) agit sur un épaulement (40) du tiroir (4) par l'intermédiaire d'un levier (50).

FIG. 1

FIG. 2

FIG. 3

FIG. 4